# EUROPÄISCHE PATENTSCHRIFT

(11) **EP 1 050 172 B1**
(45) Veröffentlichungstag und Bekanntmachung des Hinweises auf die Patenterteilung: **01.03.2006**
(21) Anmeldenummer: 98966593.0
(22) Anmeldetag: 29.12.1998
(51) Int. Cl.: H04Q 3/66

(54) **VERFAHREN UND ERMITTLUNGSEINRICHTUNG ZUM ERMITTELN EINES VERBINDUNGSPFADS IN EINEM KOMMUNIKATIONSNETZ**
METHOD AND DEVICE FOR ESTABLISHING A CONNECTION PATH IN A COMMUNICATIONS NETWORK
PROCEDE ET DISPOSITIF DE DETECTION POUR IDENTIFIER UN CHEMIN DE LIAISON DANS UN RESEAU DE COMMUNICATION

(30) Priorität: 23.01.1998 DE 19802599
(43) Veröffentlichungstag der Anmeldung: 08.11.2000
(73) Patentinhaber: SIEMENS AKTIENGESELLSCHAFT, 80333 München (DE)
(72) Erfinder: LIEBL, Robert, D-93470 Lohberg (DE)
(86) Internationale Anmeldenummer: PCT/DE1998/003813
(87) Internationale Veröffentlichungsnummer: WO 1999/038340

(56) Entgegenhaltungen:
- EP-A- 0 696 147
- WO-A-93/08666
- US-A- 3 536 842
- US-A- 4 862 496
- HARTMANN H L: "DYNAMISCHE NICHTHIERARCHISCHE VERKEHRSLENKUNG" NTZ NACHRICHTEN TECHNISCHE ZEITSCHRIFT, Bd. 44, Nr. 10, 1. Oktober 1991, Seiten 724-732, XP000265354
- LANGNICKEL B-U ET AL: "AUF ALTERNATIVWEGEN ZU MEHR GEWINN" TELCOM REPORT, Bd. 18, Nr. 5, September 1995, Seiten 244-247, XP000543148

## Beschreibung

Die vorliegende Erfindung betrifft ein Verfahren zum Ermitteln eines Verbindungspfads in einem Kommunikationsnetz sowie eine entsprechende Vermittlungseinrichtung zum Einsatz in Kommunikationsnetzen, insbesondere in Kommunikationsnetzen mit hierarchisch kompletter Verbindungspfadermittlung.

Bekannterweise bestehen Kommunikationsnetze aus einer Vielzahl von Netz- oder Vermittlungsknoten, die gemäß einer bestimmten Netztopologie miteinander verbunden sind. An einige dieser Netzknoten können Teilnehmer-Endgeräte als benutzerspezifische Anschlußeinheiten eines Kommunikationsnetzes angeschlossen sein, während andere dieser Netzknoten lediglich als Transferknoten, d.h. zur Weiterleitung von Kommunikationsinformationen dienen.

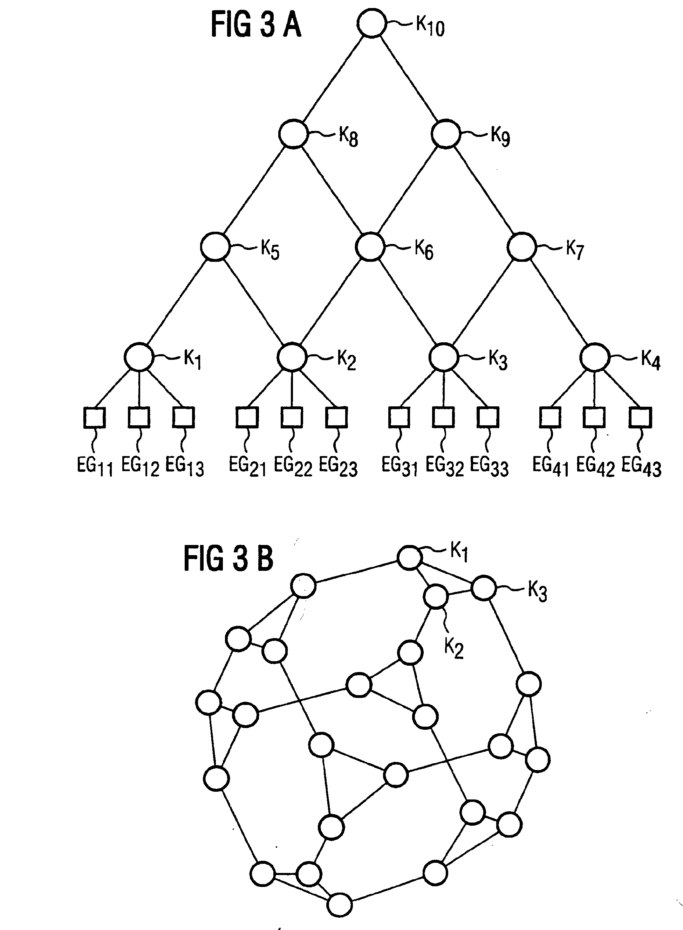

Fig. 3a zeigt beispielhaft den Aufbau einer binärartigen Kommunikationsnetzstruktur. Gemäß Fig. 3a umfaßt das beispielhaft dargestellte Kommunikationsnetz insgesamt zehn Netzknoten K₁ - K₁₀. An die Netzknoten K₁ - K₄ sind jeweils mehrere Teilnehmer-Endgeräte EG₁₁ - EG₄₃ angeschlossen. Diese Netzknoten K₁ - K₄ bilden die unterste Hierarchiestufe des in Fig. 3a gezeigten Kommunikationsnetzes und werden als lokale Netzknoten bezeichnet. Die lokalen Netzknoten K₁ - K₄ sind über die weiteren Netzknoten K₅ - K₁₀ mittels entsprechender Verbindungspfade miteinander verbunden. An die Netzknoten K₅ - K₁₀ sind gemäß dem in Fig. 3a dargestellten Beispiel keine Teilnehmer-Endgeräte angeschlossen, so daß diese Netzknoten lediglich als Transfer- oder Vermittlungsknoten dienen. Die Netzknoten K₅ - K₇ entsprechen regionalen Netzknoten und dienen zur Verbindung der lokalen Netzknoten K₁ und K₂, K₂ und K₃ bzw. K₃ und K₄. Die Netzknoten K₈ und K₉ dienen entsprechend zur Verbindung der regionalen Netzknoten K₅ und K₆ bzw. K₆ und K₇ und werden als überregionale Netzknoten bezeichnet. Die oberste Hierarchiestufe des in Fig. 3a gezeigten Kommunikationssystems bildet schließlich die Knotenzentrale K₁₀, welche die überregionalen Netzknoten K₈ und K₉ miteinander verbindet. Wird beispielsweise von dem Teilnehmer-Endgerät EG₁₂ der Teilnehmer EG₄₂ angerufen, muß ausgehend von dem lokalen Netzknoten K₁ zu dem lokalen Ziel-Netzknoten K₄ des angerufenen Teilnehmers ein Verbindungspfad bzw. Verbindungsweg über das Kommunikationsnetz aufgebaut werden. Dabei gibt es gemäß dem in Fig. 3a gezeigten Kommunikationsnetz mehrere Verbindungsmöglichkeiten. Eine Verbindung könnte beispielsweise über die Netzknoten K₁- K₅ - K₈ - K₁₀ - K₉ - K₇ - K₄ führen. Eine weitere Verbindungsmöglichkeit wäre der Verbindungspfad über die K₁ - K₅ - K₂ - K₆ - K₃ - K₇ - K₄ usw.. Die einzelnen Netzknoten K₁- K₁₀ sind durch Vermittlungseinrichtungen gebildet, deren Aufgabe es unter anderem ist, den geeigneten Verbindungspfad von einem anrufenden Endgerät zu einem angerufenen Endgerät zu ermitteln und die entsprechende Verbindung aufzubauen.

Während Fig. 3a eine baumartige Kommunikationsnetzstruktur darstellt, zeigt Fig. 3b eine würfelartige Kommunikationsnetzstruktur, wobei insbesondere jeweils drei Netzknoten K₁ - K₃ eine Netzknotengruppe bilden, die über entsprechende Verbindungsleitungen mit einer benachbarten Netzknotengruppe, die ebenfalls aus drei Netzknoten besteht, verbunden ist. An jeden der in Fig. 3b dargestellten Netzknoten können wahlweise Endgeräte angeschlossen sein oder der entsprechende Netzknoten kann lediglich als Transferknoten ohne daran angeschlossene Endgeräte dienen.

Aufgrund des in letzter Zeit gestiegenen Bedürfnisses nach digitalen Kommunikationsnetzen mit großen Bandbreiten und hohen übertragungsraten hat sich zur Datenübertragung in Kommunikationsnetzen das sogenannte ATM-Übermittlungsprinzip (asynchronous transfer mode) durchgesetzt. Gemäß diesem ATM-Übermittlungsprinzip werden die zu übertragenden Daten in Form von sogenannten ATM-Zellen übermittelt, die aus einem Header und einem Informationsfeld bestehen. Der Header enthält Adress- bzw. Steuerinformationen der entsprechenden ATM-Zelle, während das Informationsfeld die eigentliche Nutzinformation aufweist. Die in dem Header enthaltenen Adressinformationen werden für das Routing der Nutzinformation innerhalb des Kommunikationsnetzes verwendet. Die Datenübertragung von einem Netzknoten zu einem anderen erfolgt optisch, d.h. über Lichtwellenleiter.

In Kommunikationsnetzen mit hierarchisch kompletter Pfadermittlung ist in den einzelnen Netzknoten die Netztopologie des Koromunikationsnetzes gespeichert und somit bekannt. Damit ist jeder Netzknoten bzw. die entsprechende Vermittlungseinrichtung dieses Netzknotens beispielsweise darüber informiert, wie viele und welche andere Netzknoten in dem Kommunikationsnetz vorhanden sind, welche Verbindungsleitungen bzw. Verbindungspfade zwischen den einzelnen Netzknoten existieren und welche Übertragungseigenschaften (z.B. Übertragungskapazitäten und Übertragungszustände) die entsprechenden Verbindungspfade besitzen. Somit ist im Prinzip jeder Netzknoten in der Lage, einen hierarchisch kompletten Verbindungspfad zu einem gewünschten Zielknoten des Kommunikationsnetzes zu ermitteln. In der Regel wird der komplette Verbindungspfad von demjenigen Netzknoten festgelegt, an den das anrufende Endgerät angeschlossen ist (vgl. in Fig. 3a die Netzknoten K₁ - K₄). Nach Erhalt der entsprechenden Verbindungsanfrage (z.B. zu dem in Fig. 3a dargestellten Endgerät EG₄₂) ermittelt der Ausgangsknoten anhand der ihm zur Verfügung stehenden Informationen über das Kommunikationsnetz den gesamten Pfad durch das Kommunikationsnetz bis zu dem gewünschten Zielknoten. Nach Festlegung des geeigneten Verbindungspfads erzeugt der Ausgangsknoten bzw. dessen Vermittlungseinrichtung ein Informationselement, in dem die einzelnen entlang des festgelegten Verbindungspfad zu durchlaufenden Netzknoten festgelegt sind. Zusätzlich können auch bereits die Verbindungsleitungen (Ports) in dem Informationselement festgelegt sein. Dieses Informationselement wird zusammen mit einem Zeiger (Pointer) an die einzelnen an dem festgelegten Verbindungspfad beteiligten Netzknoten übermittelt, wobei der Zeiger jeweils auf den nächsten anzulaufenden Netzknoten verweist. Wird beispielsweise eine Verbindung von dem in Fig. 3a gezeigten Endgerät EG₁₂ zu dem Endgerät EG₄₂ gewünscht und hat der Ausgangsknoten K₁ für diese Verbindung die Route K₁ - K₅ - K₂ - K₆ - K₃ - K₇ - K₇ - K₄ ausgewählt, sind in dem entsprechenden Informationselement in Form eines Stack-Speichers nacheinander die einzelnen anzulaufenden Netzknoten K₅, K₂, K₆, K₃, K₇ und K₄ abgelegt, wobei zunächst der Zeiger des Informationselements auf den Netzknoten K₅ zeigt.

Um die Verbindungsaufbauzeiten relativ kurz zu halten werden in den einzelnen Netzknoten die Verbindungspfade zu jedem potentiellen Zielknoten des Kommunikationsnetzes im voraus ermittelt und abgespeichert. Wegen der verschiedenen Qualitätsanforderungen (z.B. Bandbreite, Verzögerung usw.) eines Verbindungswunsches bzw. einer Verbindungsanfrage und aufgrund der steigenden Komplexität der Kommunikationsnetze können in der Regel nicht alle möglichen Verbindungspfade von einem Ausgangsknoten zu einem Zielknoten im voraus berechnet und abgespeichert werden. Zum einen besteht dabei die Gefahr eines Speicherplatzmangels, zum anderen werden in der Regel bei weitem nicht alle möglichen Alternativpfade auch tatsächlich in Anspruch genommen. Des weiteren erhöht sich die für einen Verbindungsaufbau benötigte Zeit, falls sämtliche mögliche Alternativpfade vor dem eigentlichen Verbindungsaufbau durchsucht werden müssen bis der schließlich geeignete Verbindungspfad gefunden werden konnte. Erfüllen andererseits nicht alle vorausberechneten Verbindungspfade die Anforderungen eines Verbindungswunsches (beispielsweise bezüglich der Bandbreite oder Übertragungsrate), muß erst anhand der zur Verfügung stehenden Netzinformationen ein geeigneter Verbindungspfad neu ermittelt werden. Abhängig von der Komplexität des Kommunikationsnetzes kann dies ein sehr zeitintensiver Vorgang sein, wodurch der Verbindungsaufbau erheblich verzögert bzw. sogar gefährdet werden kann. Als Kompromiß werden daher in jedem Netzknoten lediglich eine bestimmte Anzahl von Standard-Verbindungspfaden gespeichert. Zu diesem Zweck werden für die einzelnen Verbindungspfade zu jedem Netzknoten des Kommunikationsnetzes bezüglich der Qualitätsanforderungen des entsprechenden Verbindungswunsches Standardwerte angenommen, und es wird beispielsweise zu jedem potentiellen Zielknoten lediglich der/die jeweils kürzeste/n Verbindungspfad/e berechnet und abgespeichert. Bei einem anstehenden Verbindungswunsch werden nun alle vorausberechneten und abgespeicherten Verbindungspfade dahingehend überprüft, ob sie die Qualitätsanforderungen des anstehenden Verbindungswunsches erfüllen. Erfüllt einer der vorausberechneten Verbindungspfade die Qualitätsanforderungen, wird dieser für den Verbindungsaufbau zu dem gewünschten Zielknoten verwendet. Erfüllt jedoch keiner der vorausberechneten Verbindungspfade die entsprechenden Qualitätsanforderungen, wird anhand der gespeicherten Netztopologiedaten ein geeigneter Alternativpfad zu dem gewünschten Zielknoten ermittelt und für den Verbindungsaufbau verwendet.

Die zuvor beschriebene Vorgehensweise hat jedoch den Nachteil, daß abhängig von dem anstehenden Verbindungswunsch weiterhin relativ lange Verbindungsaufbauzeiten nicht auszuschließen sind, da lediglich eine relativ geringe Anzahl von Standard-Verbindungspfaden vorausberechnet und abgespeichert ist, so daß für den Fall, daß keiner dieser vorausberechneten Standard-Verbindungspfade die Qualitätsanforderungen einer gewünschten Verbindung erfüllen kann, gegebenenfalls erst ein geeigneter Alternativpfad ermittelt werden muß, was abhängig von der Komplexität des Kommunikationsnetzes zum Teil sehr zeitintensiv sein kann.

Desweiteren ist aus der US-Patenschrift US-A-4 862 496 ein Verfahren bekannt, daß zur Verkehrslenkung in einem leitungsvermittelnden Kommunikationsnetz insbesondere beim Aufbau einer Verbindung zwischen benachbarten Vermittlungsknoten anhand von in den jeweiligen Vermittlungsknoten vorgegebenen weiteren Verbindungspfaden einen Zweitweg auswählt, wobei beim Auftreten einer Überlast auf dem bevorzugten Verbindungspfad die zu vermittelnde Verbindung verworfen wird und einer der vorgegebenen weiteren Verbindungspfade als aktueller Alternativ-Verbindungspfad ausgewählt wird. Ist beispielsweise der für den Verbindungsaufbau vorgesehene Direktweg zwischen einem ersten Netzknoten und einem benachbarten zweiten Netzknoten überlastet, so kann über den im ersten Netzknoten vorgegebenen aktuellen Alternativ-Verbindungspfad die Verbindung aufgebaut werden. Derartige Verkehrslenkungsverfahren für leitungsvermittelnde Kommunikationsnetze werden in Fachkreisen der Gattung der "Hop-by-Hop-Routing"-Verfahren zugeordnet.

Der vorliegenden Erfindung liegt daher die Aufgabe zugrunde, ein verbessertes Verfahren zum Ermitteln eines Verbindungspfads in einem Kommunikationsnetz sowie eine entsprechende Vermittlungseinrichtung für ein Kommunikationsnetz zu schaffen, wobei die für den Aufbau einer gewünschten Verbindung benötigte Zeit verkürzt werden kann.

Diese Aufgabe wird gemäß der vorliegenden Erfindung durch ein Verfahren mit den Merkmalen des Anspruches 1 sowie eine Vermittlungseinrichtung mit den Merkmalen des Anspruches 11 gelöst. Die Unteransprüche beschreiben vorteilhafte Ausgestaltungen der vorliegenden Erfindung, die ihrerseits zu einer weiteren Verkürzung der Verbindungsaufbauzeiten bzw. zur Gewährleistung der Ermittlung eines geeigneten Verbindungspfades beitragen.

Gemäß der vorliegenden Erfindung wird ein dynamischer Verbindungspfadspeicher angelegt. Dieser Verbindungspfadspeicher wird bei Anliegen eines Verbindungswunsches bzw. einer Verbindungsanfrage nach einem geeigneten Verbindungspfad zu dem gewünschten Zielknoten durchsucht. Erfüllen die gespeicherten Verbindungspfade nicht die Anforderungen des Verbindungswunsches, wird anhand der gespeicherten Netztopologiedaten ein geeigneter Alternativpfad zu dem gewünschten Zielknoten ermittelt und in den dynamischen Verbindungspfadspeicher eingetragen, wobei die in dem dynamischen Verbindungspfadspeicher abgelegten Verbindungspfade über die Verbindungsdauer hinaus in der entsprechenden Vermittlungseinrichtung gespeichert bleiben.

Dieser dynamische Verbindungspfadspeicher kann alternativ oder zusätzlich zu dem eingangs beschriebenen Speicher mit vorausberechneten Standard-Verbindungspfaden vorhanden sein. Ist der dynamische Verbindungspfadspeicher zusätzlich zu dem Speicher mit vorausberechneten Standard-Verbindungspfaden vorhanden, wird bei Eingehen einer Verbindungsanfrage zunächst der Speicher mit vorausberechneten Standard-Verbindungspfaden nach einem geeigneten Verbindungspfad zu dem gewünschten Zielknoten durchsucht, der auch die Anforderungen des Verbindungswunsches erfüllt. Sind sämtliche vorausberechneten Standard-Verbindungspfade für den anstehenden Verbindungswunsch ungeeignet, werden im nächsten Schritt die in dem dynamischen Verbindungspfadspeicher gespeicherten Verbindungspfade durchsucht. Befindet sich zu diesem Zeitpunkt in dem dynamischen Verbindungspfadspeicher noch kein Eintrag bzw. ist auch in dem dynamischen Verbindungspfadspeicher kein geeigneter Verbindungspfad abgelegt, der die Anforderungen des Verbindungswunsches erfüllt, wird anhand der gespeicherten Netztopologiedaten ein geeigneter Alternativpfad ermittelt und in den dynamischen Verbindungspfadspeicher eingetragen. Anschließend wird dieser Verbindungspfad für den Verbindungsaufbau verwendet.

Der dynamische Verbindungspfadspeicher kann eine vorgegebene maximale Anzahl von zielknotenspezifischen Speicherplätzen aufweisen. Soll ein neuer Verbindungspfad in den dynamischen Verbindungspfadspeicher eingetragen werden und sind bereits sämtliche n Speicherplätze belegt, kann beispielsweise der sich am längsten im dynamischen Verbindungspfadspeicher befindliche Verbindungspfad überschrieben werden. Ebenso ist es möglich, den am wenigsten häufig benutzten Verbindungspfad zu überschreiben. Entfällt ein in dem dynamischen Verbindungspfadspeicher gespeicherter Verbindungspfad bzw. wird dieser ungültig, z.B. weil benutzte Teilstrecken oder Netzknoten ausgefallen sind, wird der entsprechende Verbindungspfad aus dem dynamischen Pfadspeicher entfernt, d.h. gelöscht.

Die maximale Anzahl n der Speicherplätze des dynamischen Verbindungspfadspeichers kann fest vorgegeben oder einstellbar sein. Vorteilhaft ist es, die Anzahl der "Überläufe" pro festgelegter Zeiteinheit des dynamischen Verbindungspfadspeichers zu erfassen und davon abhängig die maximale Anzahl der Speicherplätze des dynamischen Verbindungspfadspeichers zu erhöhen. Durch eine Timersteuerung kann beispielsweise nach Ablauf einer bestimmten Zeitspanne die maximale Anzahl der zur Verfügung stehenden Speicherplätze nach einer Erhöhung wieder zurückgestellt werden.

Durch die erfindungsgemäß vorgeschlagene Verwendung eines dynamischen Pfadspeichers wird in dem entsprechenden Netzknoten, d.h. der entsprechenden Vermittlungseinrichtung, des Kommunikationsnetzes eine sich selbst optimierende Verbindungspfadtabelle angelegt. Auf diese Weise wird sichergestellt, daß die Speicherressourcen vor Verbindungspfaden, die nur selten oder gar nicht benutzt werden, verschont bleiben. Des weiteren ist lediglich die Berechnung von wenigen bzw. überhaupt keinen vorausberechneten Standard-Verbindungspfaden erforderlich. Aufgrund der Verwendung des dynamischen Verbindungspfadspeichers verkürzen sich die Verbindungsaufbauzeiten im Mittel, da infolge des dynamischen Verbindungspfadspeichers die Wahrscheinlichkeit erheblich zunimmt, daß für einen eingehenden Verbindungswunsch ein bereits geeigneter Verbindungspfad zur Verfügung steht.

Die vorliegende Erfindung läßt sich sowohl auf Breitbandnetze als auch auf Schmalbandnetze anwenden und ist von dem jeweils zur Datenübertragung verwendeten Kommunikationsstandard unabhängig.

Die Erfindung wird nachfolgend anhand bevorzugter Ausführungsbeispiele unter Bezugnahme auf die beigefügte Zeichnung näher erläutert. Es zeigen:
Fig. 1 ein schematisches Blockschaltbild des Aufbaus eines ersten Ausführungsbeispiels der erfindungsgemäßen Vermittlungseinrichtung,
Fig. 2 ein schematisches Blockschaltbild des Aufbaus eines zweiten Ausführungsbeispiels der erfindungsgemäßen Vermittlungseinrichtung, und
Fig. 3a und 3b beispielhafte Kommunikationsnetzstrukturen.

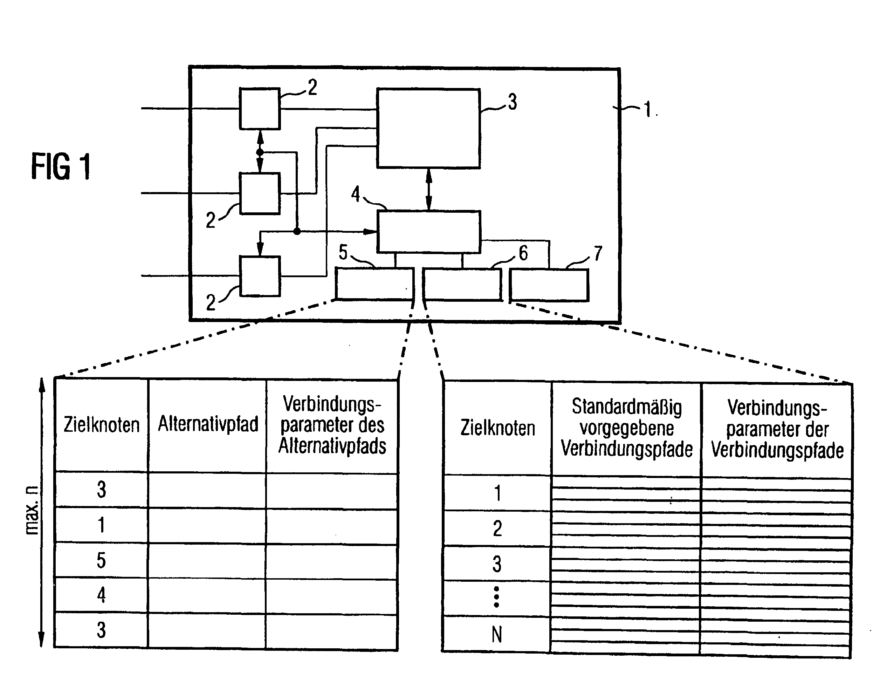

Fig. 1 zeigt eine Vermittlungseinrichtung 1, die Bestandteil jedes Netzknotens eines Kommunikationsnetzes ist, welches beispielsweise wie in Fig. 3a oder 3b strukturiert sein kann. Die Vermittlungseinrichtung 1 umfaßt mehrere Anschlußeinheiten 2, die jeweils mit einem Teilnehmer-Endgerät oder einer anderen Vermittlungseinrichtung eines anderen Netzknotens verbunden sind. Die Anschlußeinheiten 2 wandeln die ankommenden Informationen in intern zu verarbeitende digitale Datenworte um. Des weiteren weist die Vermittlungseinrichtung 1 eine Schalt- oder Koppeleinrichtung 3 auf, die dazu dient, zwischen den einzelnen Anschlußeinheiten 2 der Vermittlungseinrichtung 1 eine physikalische Verbindung zur Übertragung von Daten zwischen den mit den entsprechenden Anschlußeinheiten 2 verbundenen Pfaden herzustellen. Die Koppeleinrichtung 3 umfaßt eine Vielzahl von einzelnen Koppelelementen, die ein Schalt- oder Koppelnetz (switching network) bilden. Die Koppeleinrichtung 3 ist die eigentliche Vermittlungsstelle der Vermittlungseinrichtung 1. Des weiteren umfaßt die Vermittlungseinrichtung 1 eine beispielsweise in Form eines Mikroprozessors ausgestaltete Steuereinheit 4, welche das Herz der Vermittlungseinrichtung 1 bildet und sowohl zur Ansteuerung und Überwachung der einzelnen Anschlußeinheiten 2 als auch der Koppeleinrichtung 3 dient. Unter anderem sorgt die Steuereinheit 4 für die Synchronisation der einzelnen Anschlußeinheiten 2 auf den internen Takt der Vermittlungseinrichtung 1 und zur Festlegung der durch die Koppeleinrichtung 3 zu realisierenden physikalischen Verbindungen zwischen den einzelnen Anschlußeinheiten 2. Die Steuereinheit 4 legt somit fest, über welchen Pfad bzw. über welche Anschlußeinheit 2 die über eine andere Anschlußeinheit 2 empfangenen Kommunikationsdaten weitergeleitet bzw. ausgegeben werden sollen.

Des weiteren umfaßt die in Fig. 1 gezeigte Vermittlungseinrichtung 1 einen ersten Speicher 7, in dem die Daten der Netztopologie des entsprechenden Kommunikationsnetzes umfassend gespeichert sind. Insbesondere ist in diesem ersten Speicher 7 gespeichert, wie viele und welche andere Netzknoten das Kommunikationsnetz aufweist, welche Verbindungsleitungen bzw. Verbindungspfade zwischen den einzelnen Netzknoten existieren und welche Übertragungseigenschaften (wie z.B. Übertragungskapazitäten oder Übertragungszustände) diese Übertragungspfade aufweisen usw..

In einem zweiten Speicher 6 sind die bereits zuvor erläuterten vorausberechneten Standard-Verbindungspfade zu den einzelnen potentiellen Zielknoten des Kommunikationsnetzes gespeichert. Wie bereits erläutert worden ist, ist es gemäß dem Stand der Technik bekannt, zu den einzelnen potentiellen Zielknoten des Kommunikationsnetzes bestimmte Standard-Verbindungspfade vorauszuberechnen, wobei diese Standard-Verbindungspfade beispielsweise jeweils dem kürzesten Verbindungspfad von der Vermittlungseinrichtung 1 zu einem anderen potentiellen Zielknoten des Kommunikationsnetzes entsprechen können. Somit sind in dem zweiten Speicher 6 zielknotenspezifisch bestimmte Standard-Verbindungspfade sowie die entsprechenden Verbindungsparameter bzw. Verbindungseigenschaften (wie z.B. Übertragungskapazität oder Übertragungszustand) gespeichert. Es ist jedoch nicht unbedingt erforderlich, in dem zweiten Speicher 6 die Verbindungsparameter zu jedem Verbindungspfad zu speichern, da diese Informationen im Prinzip bereits in dem ersten Speicher 7 abgelegt sind. Um jedoch die Verbindungsaufbauzeiten möglichst gering zu halten, ist es vorteilhaft, zu jedem in dem zweiten Speicher 6 abgelegten Verbindungspfad zugleich die entsprechenden Verbindungsparameter bzw. Verbindungseigenschaften abzulegen. Bei dem in Fig. 1 gezeigten Ausführungsbeispiel wird davon ausgegangen, daß das entsprechende Kommunikationsnetz neben der Vermittlungseinrichtung 1 weitere N andere Vermittlungseinrichtungen aufweist, die als potentielle Zielknoten für eine Kommunikationsverbindung mit der Vermittlungseinrichtung 1 dienen. Zu jedem potentiellen Zielknoten können eine oder mehrere Standard-Verbindungspfade abgespeichert sein.

Die Vermittlungseinrichtung 1 umfaßt zudem einen dritten Speicher 5, welcher als dynamischer Verbindungspfadspeicher dient. Dieser Speicher 5 ist bei Erstinbetriebnahme der Vermittlungseinrichtung 1 zunächst leer.

Die Funktion der in Fig. 1 gezeigten Vermittlungseinrichtung bzw. deren Steuereinheit 4 ist folgendermaßen.

Wird über eine der Anschlußeinheiten 2 eine Verbindungsanfrage bzw. ein Verbindungswunsch empfangen, muß die Steuereinheit 4 vor Aufbau der entsprechenden Verbindung zunächst eine geeigneten Verbindungspfad zu dem gewünschten Zielknoten ermitteln, wobei dieser Verbindungspfad insbesondere gegebenenfalls benutzerspezifisch vorgegebenen Qualitätsanforderungen an die gewünschte Verbindung (z.B. Bandbreite, Übertragungsrate usw.) gerecht werden muß. Zu diesem Zweck durchsucht die Steuereinheit 4 zunächst die im zweiten Speicher 6 abgelegten Standard-Verbindungspfade zu dem gewünschten Zielknoten. Anhand der ebenfalls im zweiten Speicher 6 abgelegten Verbindungseigenschaften der entsprechenden Standard-Verbindungspfade zu dem gewünschten Zielknoten kann die Steuereinheit 4 feststellen, ob der zweite Speicher 6 einen für die gewünschten Verbindungseigenschaften geeigneten Verbindungspfad zu dem gewünschten Zielknoten aufweisen. Ist dies der Fall, wird der entsprechende Verbindungspfad aus dem zweiten Speicher 6 ausgelesen und für den Verbindungsaufbau verwendet. Hat jedoch die Steuereinheit 4 keinen geeigneten Verbindungspfad zu dem gewünschten Zielknoten in dem zweiten Speicher 6 festgestellt, ermittelt die Steuereinheit 4 unter Bezugnahme auf die im ersten Netztopologiespeicher 7 gespeicherten Netztopologiedaten einen geeigneten Verbindungspfad zu dem gewünschten Zielknoten, der insbesondere die Qualitätsanforderungen des Verbindungswunsches erfüllt.

Anschließend wird dieser von der Steuereinheit 4 ermittelte Alternativpfad in den dritten, dynamischen Verbindungspfadspeicher 5 eingetragen. Die Eintragung erfolgt zielknotenspezifisch und kann, wie in Fig. 1 gezeigt ist, auch die Verbindungsparameter bzw. Übertragungseigenschaften des entsprechenden ermittelten Verbindungspfads umfassen. Die Eintragungen in den dritten, dynamischen Speicher 5 erfolgen dabei in der Reihenfolge der Ermittlung der entsprechenden Verbindungspfade durch die Steuereinheit 4. Vorteilhafterweise werden daher die ermittelten Verbindungspfade in dem dritten Speicher 5 in Form eines FIFO-Stacks gespeichert. Wie Fig. 1 zu entnehmen ist, ist der dritte, dynamische Speicher 5 nicht auf eine Eintragung pro potentiellen Zielknoten beschränkt, sondern es können zu jedem Zielknoten mehrere Verbindungspfade (gegebenenfalls mit unterschiedlichen Übertragungseigenschaften) eingetragen werden. Nach Eintragung eines Verbindungspfads in den dritten Speicher 5 wird der entsprechende von der Steuereinheit 4 ermittelte Verbindungspfad für den Verbindungsaufbau zu dem gewünschten Zielknoten verwendet. Die Eintragungen in den dritten Speicher 5 bleiben auch über die Verbindungsdauer des jeweils entsprechenden Verbindungspfads hinaus in dem dritten Speicher 5 gespeichert.

Gehen anschließend weitere Verbindungswünsche bei der Vermittlungseinrichtung 1 ein, durchsucht die Steuereinheit 4 nicht nur die in dem zweiten Speicher 6 abgelegten,
vorausberechneten Standard-Verbindungspfade zu dem gewünschten Zielknoten, sondern auch die in dem dritten, dynamischen Speicher 5 abgelegten Eintragungen. Erst wenn sowohl in dem zweiten Speicher 6 als auch in dem dritten, dynamischen Speicher 5 keine geeigneten Verbindungspfade zu dem gewünschten Zielknoten gefunden werden, ermittelt die Steuereinheit 4 wieder anhand der in dem zweiten Speicher 6 gespeicherten Netztopologiedaten einen geeigneten Verbindungspfad und trägt diesen anschließend in den dritten Speicher 5 ein.

Der Umfang des dritten Speichers 5 kann entweder fest vorgegeben oder variabel sein. Vor Eintragen eines neu ermittelten Verbindungspfads in den dritten Speicher 5 überwacht die Steuereinheit 4 regelmäßig die Speicherbelegung des dritten Speichers 5. Soll ein neu ermittelter Verbindungspfad in den dritten Speicher 5 eingetragen werden, obwohl bereits eine maximale Anzahl n von Speicherplätzen belegt ist, überschreibt die Steuereinheit gemäß dem in Fig. 1 gezeigten ersten Ausführungsbeispiel den am längsten in dem dritten Speicher 5 gespeicherten Verbindungspfad. Ist inzwischen ein Verbindungspfad ungültig geworden, z. B. weil benutzte Teilstrecken oder Netzknoten ausgefallen sind, wird dieser Verbindungspfad gegebenenfalls sowohl aus dem Speicher 6 als auch aus dem dritten Speicher 5 entfernt.

Durch die Verwendung des dritten, dynamischen Speichers 5 können die Verbindungsaufbauzeiten im Durchschnitt verkürzt werden, da die Wahrscheinlichkeit erheblich zunimmt, daß entweder in dem zweiten Speicher 6 oder in dem dritten Speicher 5 ein geeigneter Verbindungspfad zur Verfügung steht. Insbesondere enthält der dritte Speicher 5 ausschließlich Einträge von Verbindungspfaden, die bereits bestimmte Qualitätsanforderungen einer entsprechenden Verbindungsanfrage erfüllt haben. Die Einträge des dritten Speichers 5 sind somit gegenüber den Einträgen des zweiten Speichers 6 qualitativ höherwertig und tragen daher zur Verkürzung der Verbindungsaufbauzeiten bei, da sie die Wahrscheinlichkeit der Auffindung eines geeigneten Verbindungspfads deutlich steigern.

Nachdem die Steuereinheit 4 der Vermittlungseinrichtung 1 wie zuvor beschrieben einen geeigneten Verbindungspfad zu dem gewünschten Zielknoten ermittelt hat, erzeugt die Steuereinheit 4 das bereits zuvor beschriebene Informationselement, in welchem die einzelnen Netzknoten des Kommunikationsnetzes, welche gemäß dem festgelegten Verbindungspfad zu durchlaufen sind, abgelegt sind. Dieses Informationselement wird von der Steuereinheit 4 über eine entsprechende Anschlußeinheit 2 an den ersten Netzknoten dieses Verbindungspfads übermittelt und umfaßt einen Zeiger (Pointer), der stets auf den als nächstes anzulaufenden Netzknoten des Kommunikationsnetzes zeigt. Der als erstes angelaufene Netzknoten des Kommunikationsnetzes setzt somit nach Empfang dieses Informationselements den Zeiger einen Netzknoten weiter.

Selbstverständlich kann die in Fig. 1 gezeigte Vermittlungseinrichtung 1 auch ohne den zweiten Speicher 6 mit den vorausberechneten und abgespeicherten Standard-Verbindungspfaden zu den einzelnen potentiellen Zielknoten des Kommunikationsnetzes verwendet werden. In diesem Fall durchsucht die Steuereinheit 4 bei Eingang einer Verbindungsanfrage ausschließlich die Einträge des dritten Speichers 5 und ermittelt anhand der in dem ersten Speicher 7 abgelegten Netztopologiedaten einen geeigneten Verbindungspfad, falls der dritte Speicher 5 keine geeigneten Verbindungspfadeinträge aufweist. Anschließend wird der neu ermittelte Verbindungspfad im dritten Speicher 5 abgelegt und steht für die Ermittlung eines neuen Verbindungspfads danach zur Verfügung.

Anhand des zweiten Speichers 6 wurde bereits erläutert, daß das Abspeichern der Verbindungsparameter des entsprechenden Verbindungspfads in dem zweiten Speicher 6 optional ist. Dies trifft auch auf die Einträge in dem dritten Speicher 5 zu. Auch bezüglich des dritten Speichers 5 ist es im Prinzip ausreichend, wenn zu dem entsprechenden Zielknoten lediglich der ermittelte Verbindungspfad abgespeichert wird, da die dem Verbindungspfad entsprechenden Übertragungseigenschaften bzw. Verbindungsparameter bereits in dem ersten Speicher 7 abgelegt sind. Das Abspeichern der Verbindungsparameter zusammen mit dem entsprechenden Verbindungspfad in dem dritten Speicher 5 ist jedoch vorteilhaft, da die Steuereinheit 4 anschließend bei der Ermittlung eines neuen Verbindungspfads nicht zusätzlich auf die Einträge in dem ersten Speicher 7 zugreifen muß, um die entsprechenden Übertragungseigenschaften des jeweiligen Verbindungspfads festzustellen.

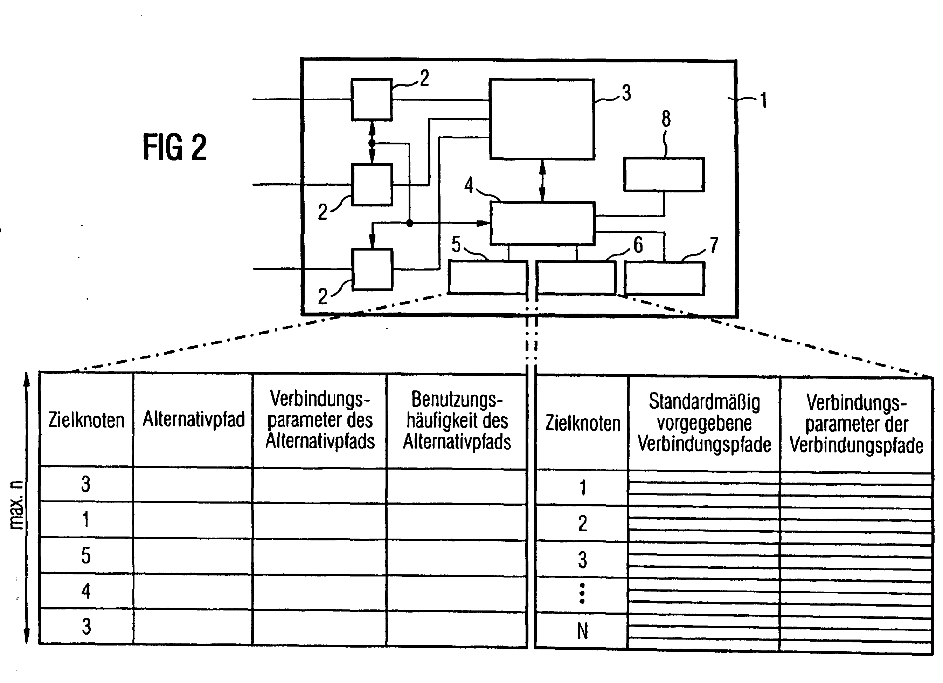

Fig. 2 zeigt ein zweites Ausführungsbeispiel der erfindungsgemäßen Vermittlungseinrichtung.

Die in Fig. 2 gezeigte Vermittlungseinrichtung 1 sowie deren Funktion entspricht im wesentlichen der in Fig. 1 gezeigten Vermittlungseinrichtung. Gemäß dem zweiten Ausführungsbeispiel umfaßt jedoch die Vermittlungseinrichtung 1 zudem einen Überlaufzähler 8. Dieser Überlaufzähler 8 erfaßt die Anzahl der Überlauffälle des dritten, dynamischen Verbindungspfadspeichers 5. Das heißt, der Zählerstand des Überlaufzählers 8 wird stets um 1 erhöht, falls die Steuereinheit 4 einen neuen Verbindungspfad in den dritten Speicher 5 eintragen will, obwohl bereits eine der vorgegebenen maximalen Anzahl n entsprechende Zahl von Verbindungspfaden abgespeichert ist. Anhand des Zählerstands des Überlaufzählers 8 kann die Steuereinheit die Anzahl der "Überläufe" des dritten Speichers 5 während einer festgelegten Zeitspanne feststellen und davon abhängig den Speicherumfang des dritten Speichers 5 entsprechend anpassen, d. h. die maximale Anzahl n der Eintragungen des Speichers 5 erhöhen oder erniedrigen. Wurde die maximale Anzahl n der Eintragungen des dritten Speichers 5 erhöht oder erniedrigt, kann gemäß einer Variante des in Fig. 2 gezeigten zweiten Ausführungsbeispiels die Steuereinheit 4 nach Ablauf einer entsprechenden Zeitspanne den maximalen Speicherumfang n des dritten Speichers 5 wieder auf den ursprünglichen Wert zurückstellen.

Eine weitere Besonderheit des in Fig. 2 gezeigten Ausführungsbeispiels ist die Tatsache, daß die Steuereinheit 4 zusätzlich zu den in Fig. 1 gezeigten Daten auch die Benutzungshäufigkeit jedes in dem dritten Speicher 5 abgelegten Verbindungspfads abspeichert. Dies bedeutet, daß die Steuereinheit 4 bei Verwendung eines in dem dritten Speicher 5 gespeicherten Verbindungspfads einen ebenfalls in dem dritten Speicher 5 gespeicherten Zähler dieses Verbindungspfads um 1 erhöht. Diese Variante ermöglicht es der Steuereinheit 4, den am wenigsten häufig benutzten Verbindungspfad des dritten Speichers 5 mit einem neu ermittelten Verbindungspfad zu überschreiben, falls bereits die maximale Anzahl n der Speicherplätze des dritten Speichers 5 belegt ist.

Insbesondere infolge der Überwachung der Benutzungshäufigkeit jedes in dem dritten Speicher 5 abgelegten Verbindungspfads wird durch den dritten Speicher 5 eine sich selbst optimierende Verbindungspfadtabelle gebildet. Die Qualität der Eintragungen des dritten Speichers 5 steigt mit der Betriebsdauer der Vermittlungseinrichtung 1 bzw. mit der Anzahl der bei der Vermittlungseinrichtung 1 eingehenden Verbindungsanfragen. Durch diese sich selbst optimierende Verbindungspfadtabelle ist gewährleistet, daß Verbindungspfade, die nur selten oder gar nicht benutzt werden, in dem dritten, dynamischen Speicher 5 nicht über eine längere Zeit gespeichert bleiben.

Durch die Verwendung des dritten, dynamischen Speichers 5, d. h. eines Speichers, dessen Inhalt sich mit Betriebsdauer der Vermittlungseinrichtung dynamisch verändert, brauchen nur noch wenige bzw. gegebenenfalls überhaupt keine Standard-Verbindungspfade vorausberechnet und (in dem zweiten Speicher 6) gespeichert werden.

## Patentansprüche

1. Verfahren zum Ermitteln eines Verbindungspfads in einem Kommunikationsnetz,
umfassend die Schritte:
a) Feststellen, ob bereits ein geeigneter Verbindungspfad zu einem gewünschten Zielknoten des Kommunikationsnetzes gespeichert ist,
b) falls im Schritt a) noch kein geeigneter gespeicherter Verbindungspfad festgestellt worden ist, Ermitteln eines geeigneten Verbindungspfads zu dem gewünschten Zielknoten anhand gespeicherter Netzdaten, welche das Kommunikationsnetz beschreiben, und Abspeichern des Verbindungspfads, so daß dieser für eine neue Ermittlung eines Verbindungspfads in dem Schritt a) zur Verfügung steht, und
c) Übermitteln von dem im Schritt a) oder b) ermittelten Verbindungspfad entsprechenden Pfadinformationen an Netzknoten, die Bestandteil des ermittelten Verbindungspfads sind, um den ermittelten Verbindungspfad zu dem gewünschten Zielknoten aufzubauen.

2. Verfahren nach Anspruch 1,
**dadurch gekennzeichnet,**
**daß** in dem Schritt a) oder b) ein Verbindungspfad zu dem gewünschten Zielknoten dann als geeigneter Verbindungspfad angesehen wird, falls der entsprechende Verbindungspfad von einem Ausgangsknoten des Kommunikationsnetzes zu dem gewünschten Zielknoten führt und bestimmte Übertragungseigenschaften für eine Datenübertragung zu dem Zielknoten erfüllt.

3. Verfahren nach Anspruch 1 oder 2,
**dadurch gekennzeichnet,**
**daß** mehrere Standard-Verbindungspfade zu bestimmten Netzknoten des Kommunikationsnetzes im voraus fest gespeichert sind, die in dem Schritt a) zusammen mit zuvor gemäß dem Schritt b) er mittelten und abgespeicherten Verbindungspfaden überprüft werden.

4. Verfahren nach einem der vorhergehenden Ansprüche,
**dadurch gekennzeichnet,**
**daß** lediglich eine bestimmte maximale Anzahl (n) von ermittelten Verbindungspfaden in dem Schritt b) abgespeichert wird.

5. Verfahren nach Anspruch 4,
**dadurch gekennzeichnet,**
**daß** bei Ermittlung eines neuen geeigneten Verbindungspfades in dem Schritt b) der am längsten gemäß dem Schritt b) zuvor abgespeicherte Verbindungspfad gelöscht wird, falls bereits zuvor eine der maximalen Anzahl (n) entsprechende Anzahl von Verbindungspfaden gemäß dem Schritt b) ermittelt und abgespeichert worden ist.

6. Verfahren nach Anspruch 4,
**dadurch gekennzeichnet,**
**daß** bei Ermittlung eines neuen geeigneten Verbindungspfades in dem Schritt b) der am wenigsten gemäß dem Schritt c) benutzte und zuvor gemäß dem Schritt b) abgespeicherte Verbindungspfad gelöscht wird, falls bereits zuvor eine der maximalen Anzahl (n) entsprechende Anzahl von Verbindungspfaden gemäß dem Schritt b) ermittelt und abgespeichert worden ist.

7. Verfahren nach einem der Ansprüche 4 - 6,
**dadurch gekennzeichnet,**
**daß** die maximale Anzahl (n) der gemäß dem Schritt b) abspeicherbaren Verbindungspfade variabel ist.

8. Verfahren nach Anspruch 7,
**dadurch gekennzeichnet,**
**daß** die Anzahl der Überlauffälle gezählt wird, bei denen ein neuer Verbindungspfad gemäß dem Schritt b) ermittelt worden ist und abgespeichert werden soll, obwohl bereits zuvor eine der maximalen Anzahl (n) entsprechende Anzahl von Verbindungspfaden gemäß dem Schritt b) ermittelt und abgespeichert worden ist, und
**daß** die maximale Anzahl (n) der gemäß dem Schritt b) abspeicherbaren Verbindungspfade abhängig von der Anzahl der Überlauffälle eingestellt wird.

9. Verfahren nach Anspruch 7 oder 8,
**dadurch gekennzeichnet,**
**daß** für den Fall, daß ein neuer Verbindungspfad gemäß Schritt b) ermittelt worden ist und abgespeichert werden soll, obwohl bereits zuvor eine der maximalen Anzahl (n) entsprechende Anzahl von Verbindungspfaden gemäß dem Schritt b) ermittelt und abgespeichert worden ist, die maximale Anzahl (n) der gemäß dem Schritt b) abspeicherbaren Verbindungspfade für eine bestimmte Zeitspanne erhöht und nach Ablauf der bestimmten Zeitspanne wieder zurückgesetzt wird.

10. Verfahren nach einem der vorhergehenden Ansprüche,
**dadurch gekennzeichnet,**
**daß** die Schritte a) - c) automatisch von einer Steuereinheit (4) in einer Vermittlungseinrichtung (1), welche einen Netzknoten (K₁ - K₁₀) des Kommunikationsnetzes bildet, durchgeführt werden.

11. Vermittlungseinrichtung (1) zur Durchführung des Verfahrens zum Ermitteln eines Verbindungspfades in einem Kommunikationsnetz,
mit mehreren Anschlußeinheiten (2), die jeweils mit mindestens einem Endgerät (EG₁₁ - EG₄₃) oder mindestens einer weiteren Vermittlungseinrichtung verbunden sind,
mit einem ersten Speicher (7) zum Speichern von das Kommunikationsnetz beschreibenden Netzdaten,
mit einem zweiten Speicher (6) zum Speichern von Verbindungspfaden, welche die Vermittlungseinrichtung (1) mit bestimmten Ziel-Vermittlungseinrichtungen des Kommunikationsnetzes verbinden, und
mit einer Steuereinheit (4), die bei Empfang einer Verbindungsanfrage über eine der Anschlußeinheiten (2) für eine Verbindung mit einer gewünschten Ziel-Vermittlungseinrichtung des Kommunikationsnetzes die den zweiten Speicher (6) nach einem geeigneten Verbindungspfad zu der gewünschten Ziel-Vermittlungseinrichtung durchsuchen und, falls sie keinen geeigneten Verbindungspfad in dem zweiten Speicher (6) finden, anhand der im ersten Speicher (7) gespeicherten Netzdaten einen geeigneten Verbindungspfad zu der gewünschten Ziel-Vermittlungseinrichtung ermitteln und im zweiten Speicher (6) abspeichern,
wobei die Steuereinheit (4) nach Feststellen eines im zweiten Speicher (6) gespeicherten geeigneten Verbindungspfads oder Ermitteln eines geeigneten Verbindungspfads anhand der im ersten Speicher (7) gespeicherten Netzdaten über eine entsprechende Anschlußeinheit (2) dem geeigneten Verbindungspfad entsprechenden Pfadinformationen an weitere Vermittlungseinrichtungen, welche Bestandteil des geeigneten Verbindungspfades zu der gewünschten Ziel-Vermittlungseinrichtung sind, übermitteln, um den Verbindungspfad zu der gewünschten Ziel-Vermittlungseinrichtung aufzubauen.

12. Vermittlungseinrichtung nach Anspruch 11,
**gekennzeichnet durch**
einem dritten Speicher (5), in denen mehrere Standard-Verbindungspfade zu bestimmten Ziel-Vermittlungseinrichtungen des Kommunikationsnetzes fest gespeichert sind,
wobei die Steuereinheit (4) infolge einer Verbindungsanfrage für eine Verbindung zu einer gewünschten Ziel-Vermittlungseinrichtung die den dritten Speicher (5) zusammen mit dem zweiten Speicher (6) nach einem geeigneten Verbindungspfad zu der gewünschten Ziel-Vermittlungseinrichtung durchsuchen.

13. Vermittlungseinrichtung nach Anspruch 11 oder 12,
**dadurch gekennzeichnet,**
**daß** die Steuereinheit (4) die Anzahl der im zweiten Speicher (6) gespeicherten Verbindungspfade bezüglich einer bestimmten maximalen Anzahl (n) überwacht.

14. Vermittlungseinrichtung nach Anspruch 13,
**dadurch gekennzeichnet,**
**daß** die Steuereinheit (4) nach Ermittlung eines neuen geeigneten Verbindungspfads anhand der im ersten Speicher (7) gespeicherten Netzdaten den am längsten im zweiten Speicher (6) zuvor abgespeicherten Verbindungspfad löscht, falls die Steuereinheiten (4) feststellen, daß bereits eine der maximalen Anzahl (n) entsprechende Anzahl von Verbindungspfaden im zweiten Speicher (6) abgespeichert worden ist.

15. Vermittlungseinrichtung nach Anspruch 13,
**gekennzeichnet durch**
Zählmittel zum Zählen der Häufigkeit der Verwendung jedes im zweiten Speicher (6) gespeicherten Verbindungspfads für einen Verbindungsaufbau zu einer jeweils gewünschten Ziel-Vermittlungseinrichtung des Kommunikationsnetzes,
wobei die Steuereinheit (4) nach Ermittlung eines neuen geeigneten Verbindungspfads anhand der im ersten Speicher (7) gespeicherten Netzdaten den am wenigsten häufig verwendeten und im zweiten Speicher (6) zuvor abgespeicherten Verbindungspfad löscht, falls die Steuereinheit (4) feststellt, daß bereits eine der maximalen Anzahl (n) entsprechende Anzahl von Verbindungspfaden im zweiten Speicher (6) zuvor abgespeichert worden ist.

16. Vermittlungseinrichtung nach einem der Ansprüche 13 - 15,
**gekennzeichnet durch**
Zählmittel (8) zum Zählen der Überlauffälle des zweiten Speichers (6), bei denen nach Ermittlung eines neuen Verbindungspfads anhand der im ersten Speicher (7) gespeicherten Netzdaten dieser im zweiten Speicher (6) abgespeichert werden soll, obwohl bereits zuvor eine der maximalen Anzahl (n) entsprechende Anzahl von Verbindungs pfaden im zweiten Speicher (6) abgespeichert worden ist,
wobei die Steuereinheit (4) die maximale Anzahl (n) der im zweiten Speicher (6) abgespeicherten Verbindungspfade abhängig von der erfaßten Anzahl der Überlauffälle einstellt.

17. Vermittlungseinrichtung nach einem der Ansprüche 13 - 16,
**dadurch gekennzeichnet,**
**daß** die Steuereinheit(4) nach Ermittlung eines neuen Verbindungspfads anhand der im ersten Speicher (7) gespeicherten Netzdaten und vor Abspeicherung des ermittelten Verbindungspfads im zweiten Speicher (6) die maximale Anzahl (n) der im zweiten Speicher (6) abspeicherbaren Verbindungspfade vorübergehend erhöht, falls die Steuereinheit (4) feststellt, daß bereits eine der maximalen Anzahl (n) entsprechende Anzahl von Verbindungspfaden im zweiten Speicher (6) zuvor abgespeichert worden ist.

## Claims

1. Method for determining a connection path in a communication network,
comprising the steps:
a) establishing whether a suitable connection path to a required destination node in the communication network is already stored,
b) if no suitable stored connection path is established in step a), determining a suitable connection path to the required destination node based on stored network data, which describes the communication network, and storing the connection path so that it is available for a new determination of a connection path in step a), and
c) transferring the path information corresponding to the connection path determined in step a) or b) to network nodes that are part of the determined connection path, to set up the determined connection path to the required network node.

2. Method according to claim 1,
**characterised in that** in step a) or b) a connection path to the required destination node is deemed to be a suitable connection path, if the corresponding connection path goes from an output node in the communication network to the required destination node and complies with certain transmission characteristics for a data transmission to the destination node.

3. Method according to claim 1 or 2,
**characterised in that** a plurality of standard connection paths to certain network nodes in the communication network are stored permanently beforehand and are tested in step a) together with connection paths determined beforehand and stored according to step b).

4. Method according to one of the preceding claims,
**characterised in that** only a certain number (n) of determined connection paths is stored in step b).

5. Method according to claim 4,
**characterised in that** during determination of a new suitable connection path in step b), the connection path stored beforehand for the longest time according to step b) is deleted, if a number of connection paths corresponding to the maximum number (n) has already been determined beforehand and stored according to step b).

6. Method according to claim 4,
**characterised in that** during determination of a new suitable connection path in step b) the connection path that is least used according to step c) and has been stored beforehand according to step b) is deleted, if a number of connection paths corresponding to the maximum number (n) has already been determined beforehand and stored according to step b).

7. Method according to one of claims 4 to 6,
**characterised in that** the maximum number (n) of connection paths stored according to step b) is variable.

8. Method according to claim 7,
**characterised in that** the number of instances of overflow is counted, when a new connection path is determined according to step b) and is to be stored, even though a number of connection paths corresponding to the maximum number (n) has already been determined and stored according to step b) and the maximum number (n) of connection paths stored according to step b) is adjusted as a function of the number of instances of overflow.

9. Method according to claim 7 or 8,
**characterised in that** if a new connection path is determined according to step b) and is to be stored, even though a number of connection paths corresponding to the maximum number (n) has already been determined and stored according to step b), the maximum number (n) of connection paths that can be stored according to step b) is increased for a specific time period and reset at the end of the specific time period.

10. Method according to one of the preceding claims,
**characterised in that** the steps a) to c) are implemented automatically by a control unit (4) in a switching device (1), which forms a network node (K₁ - K₁₀) in the communication network.

11. Switching device (1) to implement the method for determining a connection path in a communication network, with a plurality of line units (2), each of which is connected to at least one terminal (EG₁₁ - EG₄₃) or at least one further switching device,
with a first storage unit (7) to store network data describing the communication network,
with a second storage unit (6) to store connection paths that connect the switching device (1) to certain destination switching devices in the communication network, and
with a control unit (4) that, on receipt of a connection request via one of the line units (2) for a connection to a required destination switching device in the communication network, searches the second storage unit (6) for a suitable connection path to the required destination switching device and, if it does not find a suitable connection path in the second storage unit (6), uses the network data stored in the first storage unit (7) to determine a suitable connection path to the required destination switching device and store it in the second storage device (6),
the control unit (4) transferring path information corresponding to the suitable connection path after defining a suitable connection path stored in the second storage unit (6) or determining a suitable connection path based on the network data stored in the first storage unit (7) via a corresponding line unit (2) to further switching devices, which are part of the suitable connection path to the required destination switching device, to set up the connection path to the required destination switching device.

12. Switching device according to claim 11,
**characterised by** a third storage unit (5) in which a plurality of standard connection paths to certain destination switching devices in the communication network are permanently stored, the control unit (4) searching the third storage unit (5) together with the second storage unit (6) for a suitable connection path to a required destination switching device further to a connection request for a connection to said required destination switching device.

13. Switching device according to claim 11 or 12,
**characterised in that** the control unit (4) monitors the number of connection paths stored in the second storage unit (6) in respect of a certain maximum number (n).

14. Switching device according to claim 13,
**characterised in that** the control unit (4) deletes the connection path stored beforehand for the longest time in the second storage unit (6) after determining a new suitable connection path based on the network data stored in the first storage unit (7), if the control units (4) establish that a number of connection paths corresponding to the maximum number (n) is already stored in the second storage unit (6).

15. Switching device according to Claim 13,
**characterised by** counting means to count the frequency of use of every connection path stored in the second storage unit (6) for setting up a connection to a respectively required destination switching device in the communication network, the control unit (4) deleting the connection path that is least used and was stored beforehand in the second storage unit (6) after determining a new suitable connection path based on the network data stored in the first storage unit (7), if the control unit (4) establishes that a number of connection paths corresponding to the maximum number (n) has already been stored beforehand in the second storage unit (6).

16. Switching device according to one of claims 13 to 15,
**characterised by** counting means (8) to count the number of times the second storage unit (6) overflows, when a new connection path is determined based on the network data stored in the first storage unit (7) and is to be stored in the second storage unit (6), even though a number of connection paths corresponding to the maximum number (n) has already been stored beforehand in the second storage unit (6), the control unit (4) adjusting the maximum number (n) of connection paths stored in the second storage unit (6) as a function of the recorded number of instances of overflow.

17. Switching device according to one of claims 13 to 16,
**characterised in that** the control unit (4) temporarily increases the maximum number (n) of connection paths that can be stored in the second storage unit (6) after determining a new connection path based on the network data stored in the first storage unit (7) and before storing the determined connection path in the second storage unit (6), if the control unit (4) establishes that a number of connection paths corresponding to the maximum number (n) has already been stored beforehand in the second storage unit (6).

## Revendications

1. Procédé pour déterminer un chemin de liaison dans un réseau de communication,
comprenant les étapes consistant à :
a) constater si un chemin de liaison approprié vers un noeud cible souhaité du réseau de communication est déjà enregistré,
b) si aucun chemin de liaison enregistré approprié n'a encore été constaté dans l'étape a), déterminer un chemin de liaison approprié vers le noeud cible souhaité sur la base de données de réseau mémorisées décrivant le réseau de communication et enregistrer le chemin de liaison de manière à ce qu'il soit disponible pour une nouvelle détermination d'un chemin de liaison dans l'étape a) et
c) transmettre les informations de chemin correspondant au chemin de liaison déterminé dans l'étape a) ou b) à des noeuds de réseau faisant partie du chemin de liaison déterminé pour établir le chemin de liaison déterminé vers le noeud cible souhaité.

2. Procédé selon la revendication 1,
**caractérisé en ce**
**qu'**un chemin de liaison vers le noeud cible souhaité est considéré comme un chemin de liaison approprié dans l'étape a) ou b) dans le cas où le chemin de liaison correspondant mène d'un noeud de départ du réseau de communication vers le noeud cible souhaité et remplit les caractéristiques de transmission déterminées pour une transmission de données vers le noeud cible.

3. Procédé selon la revendication 1 ou 2,
**caractérisé en ce**
**que** plusieurs chemins de liaison standards vers des noeuds de réseau déterminés du réseau de communication sont mémorisés au préalable de manière permanente, lesquels chemins sont vérifiés, dans l'étape a), en même temps que les chemins de liaison déterminés et enregistrés auparavant selon l'étape b).

4. Procédé selon l'une des revendications précédentes,
**caractérisé en ce**
**que** seul un nombre maximum (n) déterminé de chemins de liaison déterminés est enregistré dans l'étape b).

5. Procédé selon la revendication 4,
**caractérisé en ce**
**que**, lors de la détermination d'un nouveau chemin de liaison approprié dans l'étape b), le chemin de liaison le plus ancien enregistré auparavant selon l'étape b) est effacé dans le cas où un nombre de chemins de liaison correspondant au nombre maximum (n) a déjà été déterminé et enregistré auparavant selon l'étape b).

6. Procédé selon la revendication 4,
**caractérisé en ce**
**que**, lors de la détermination d'un nouveau chemin de liaison approprié dans l'étape b), le chemin de liaison enregistré auparavant selon l'étape b) et utilisé le moins fréquemment selon l'étape c) est effacé dans le cas où un nombre de chemins de liaison correspondant au nombre maximum (n) a déjà été déterminé et enregistré auparavant selon l'étape b).

7. Procédé selon l'une des revendications 4 - 6,
**caractérisé en ce**
**que** le nombre maximum (n) des chemins de liaison pouvant être enregistrés selon l'étape b) est variable.

8. Procédé selon la revendication 7,
**caractérisé en ce**
**que** l'on compte le nombre de cas de dépassement de capacité dans lesquels un nouveau chemin de liaison a été déterminé selon l'étape b) et doit être enregistré bien qu'un nombre de chemins de liaison correspondant au nombre maximum (n) ait déjà été déterminé et enregistré auparavant selon l'étape b), et en ce que le nombre maximum (n) des chemins de liaison pouvant être enregistrés selon l'étape b) est fixé en fonction du nombre de cas de dépassement de capacité.

9. Procédé selon la revendication 7 ou 8,
**caractérisé en ce**
**que**, pour le cas où un nouveau chemin de liaison a été déterminé selon l'étape b) et doit être enregistré bien qu'un nombre de chemins de liaison correspondant au nombre maximum (n) ait déjà été déterminé et enregistré auparavant selon l'étape b), le nombre maximum (n) des chemins de liaison pouvant être enregistrés selon l'étape b) est augmenté pour une période de temps déterminée et est ramené à sa valeur initiale à la fin de la période de temps déterminée.

10. Procédé selon l'une des revendications précédentes,
**caractérisé en ce**
**que** les étapes a) - c) sont exécutées automatiquement par une unité de commande (4) dans un dispositif de commutation (1) qui forme un noeud de réseau (K₁ - K₁₀) du réseau de communication.

11. Dispositif de commutation (1) pour l'exécution du procédé de détermination d'un chemin de liaison dans un réseau de communication, comprenant
plusieurs unités de raccordement (2) qui sont reliées à chaque fois à au moins un terminal (EG₁₁ - EG₄₃) ou au moins à un autre dispositif de commutation,
une première mémoire (7) pour enregistrer des données de réseau décrivant le réseau de communication,
une deuxième mémoire (6) pour enregistrer des chemins de liaison qui relient le dispositif de commutation (1) à des dispositifs de commutation cibles déterminés du réseau de communication,
une unité de commande (4) qui, lors de la réception, par le biais d'une des unités de raccordement (2), d'une demande de connexion pour une liaison avec un dispositif de commutation cible souhaité du réseau de communication, balaye la deuxième mémoire (6) à la recherche d'un chemin de liaison approprié vers le dispositif de commutation cible souhaité et qui, si elle ne trouve aucun chemin de liaison approprié dans la deuxième mémoire (6), détermine un chemin de liaison approprié vers le dispositif de commutation cible souhaité sur la base des données de réseau mémorisées dans la première mémoire (7) et l'enregistre dans la deuxième mémoire (6),
l'unité de commande (4) transmettant des informations de chemin correspondant au chemin de liaison approprié, par le biais d'une unité de raccordement (2) correspondante, à d'autres dispositifs de commutation faisant partie du chemin de liaison approprié vers le dispositif de commutation cible souhaité après avoir constaté un chemin de liaison approprié enregistré dans la deuxième mémoire (6) ou avoir déterminé un chemin de liaison approprié sur la base des données de réseau mémorisées dans la première mémoire (7), afin d'établir le chemin de liaison vers le dispositif de commutation cible souhaité.

12. Dispositif de commutation selon la revendication 11,
**caractérisé par**
une troisième mémoire (5) dans laquelle plusieurs chemins de liaison standards vers des dispositifs de commutation déterminés du réseau de communication sont mémorisés de manière permanente,
l'unité de commande (4) balayant la troisième mémoire (5) en même temps que la deuxième mémoire (6) à la recherche d'un chemin de liaison approprié vers le dispositif de commutation cible souhaité suite à une demande de connexion pour une liaison vers un dispositif de commutation cible souhaité.

13. Dispositif de commutation selon la revendication 11 ou 12,
**caractérisé en ce**
**que** l'unité de commande (4) surveille le nombre de chemins de liaison enregistrés dans la deuxième mémoire (6) par rapport à un nombre maximum déterminé (n).

14. Dispositif de commutation selon la revendication 13,
**caractérisé en ce**
**qu'**après avoir déterminé un nouveau chemin de liaison approprié sur la base des données de réseau mémorisées dans la première mémoire (7), l'unité de commande (4) efface le chemin de liaison le plus ancien enregistré dans la deuxième mémoire (6) dans le cas où l'unité de commande (4) constate qu'un nombre de chemins de liaison correspondant au nombre maximum (n) a déjà été enregistré dans la deuxième mémoire (6).

15. Dispositif de commutation selon la revendication 13,
**caractérisé par**
un moyen de comptage pour mesurer la fréquence d'utilisation de chaque chemin de liaison enregistré dans la deuxième mémoire (6) pour l'établissement d'une liaison vers un dispositif de commutation cible souhaité respectif du réseau de communication,
l'unité de commande (4) effaçant le chemin de liaison enregistré auparavant dans la deuxième mémoire (6) et qui est le moins fréquemment utilisé, après avoir déterminé un nouveau chemin de liaison approprié sur la base des données de réseau mémorisées dans la première mémoire (7), dans le cas où l'unité de commande (4) constate qu'un nombre de chemins de liaison correspondant au nombre maximum (n) a déjà été enregistré auparavant dans la deuxième mémoire (6).

16. Dispositif de commutation selon l'une des revendications 13 - 15,
**caractérisé par**
un moyen de comptage (8) pour compter les cas de dépassement de capacité de la deuxième mémoire (6) dans lesquels, après détermination d'un nouveau chemin de liaison sur la base des données de réseau mémorisées dans la première mémoire (7), ce chemin doit être enregistré dans la deuxième mémoire (6) bien qu'un nombre de chemins de liaison correspondant au nombre maximum (n) ait déjà été enregistré auparavant dans la deuxième mémoire (6), l'unité de commande (4) fixant le nombre maximum (n) de chemins de liaison enregistrés dans la deuxième mémoire (6) en fonction du nombre de cas de dépassement de capacité détecté.

17. Dispositif de commutation selon l'une des revendications 13 - 16,
**caractérisé en ce**
**que**, après avoir déterminé un nouveau chemin de liaison sur la base des données de réseau mémorisées dans la première mémoire (7) et avant d'enregistrer le chemin de liaison déterminé dans la deuxième mémoire (6), l'unité de commande (4) augmente provisoirement le nombre maximum (n) de chemins de liaison pouvant être enregistrés dans la deuxième mémoire (6) dans le cas où l'unité de commande (4) constate qu'un nombre de chemins de liaison correspondant au nombre maximum (n) a déjà été enregistré auparavant dans la deuxième mémoire (6).
